# EUROPEAN PATENT APPLICATION

(11) **EP 4 545 240 A1**
(43) Date of publication of application: **30.04.2025**
(21) Application number: 24207399.7
(22) Date of filing: 18.10.2024
(51) Int. Cl.: B23K 26/08, B23K 26/142, B23K 26/38, B23K 26/06, B23K 26/03, B23K 101/16, B23K 101/34, B23K 101/36, H01M 4/04

(54) **ELECTRODE PLATE MANUFACTURING APPARATUS, ELECTRODE PLATE MANUFACTURED USING THE SAME, AND METHOD THEREOF**

(30) Priority: 24.10.2023 KR 20230142641
(71) Applicant: Philenergy Co., Ltd, Osan-si Gyeonggi-do 18102 (KR)
(72) Inventor: KIM, Dong Woo, Seoul 06276 (KR); PARK, Han Beom, Gyeonggi-do 18412 (KR); HWANG, Joo Yong, Gyeonggi-do 18413 (KR); LEE, Jang Hee, Gyeonggi-do 16999 (KR); CHOI, Yeon Hoo, Gyeonggi-do 18307 (KR)
(74) Representative: Michalski Hüttermann & Partner Patentanwälte mbB

(57) **Abstract**

An electrode plate manufacturing apparatus comprising:
a first laser radiation unit (20) configured to radiate a first laser beam (L1) in a first direction (-Z-axis direction) perpendicular to an electrode film (10) located between rollers of a transfer device to notch at least a portion of the electrode film (10); and
a second laser radiation unit (30) configured to radiate a second laser beam (L2) to a notched area of the electrode film (10), which is notched by the first laser radiation unit (20), to remove a material of a surface of the electrode film (10) melted by the first laser beam (L1).

## Description

### CROSS-REFERENCE TO RELATED APPLICATION

This application claims priority to and the benefit of Korean Patent Application No. 10-2023-0142641 filed on October 24, 2023, the disclosure of which is incorporated herein by reference in its entirety.

### BACKGROUND

### 1. Field of the Invention

The present invention relates to manufacturing of a secondary battery electrode plate, and more particularly, to an electrode plate manufacturing apparatus capable of significantly reducing occurrence of defects in a secondary battery electrode plate and easily manufacturing an electrode tab of a secondary battery in various shapes, and an electrode plate manufactured using the same, and a method thereof.

### 2. Discussion of Related Art

A notching apparatus for manufacturing a secondary battery forms an electrode tab by cutting at least a portion of an electrode film. In the related art, the notching apparatus using punching has been used to form the electrode tab, but in the recent years, a laser notching apparatus capable of reducing damage to an electrode and improving production efficiency as compared to the punching is mainly used. However, when the electrode tab is formed through the laser notching apparatus, a material of an uncoated part is melted along a laser cutting path and located on one surface of a coated part, and dross is formed on one side of the coated part. There is a problem that the dross passes through a separator during a battery assembly process or battery operation, and thus an internal short occurs.

As illustrated in FIG. 1, Korean Patent No. 10-2386254 (hereinafter, referred to as "the related art") discloses a laser notching apparatus including a notching unit that notches an electrode film to be processed at each certain pitch, a vibration preventing device that is located between a first roller and a second roller, prevents shaking of the electrode film to be processed, and thus minimizes vibration of the electrode film, a rotary pattern jig unit of which one side is located on a front surface of the notching unit and which has a plurality of pattern jigs and may rotate to exchange one pattern jig located at a side of the front surface of the notching unit with the other pattern jig, and a cleaning unit that has a pattern jig cleaning unit located on the other side of the front surface of the rotary pattern jig unit and capable of cleaning the pattern jig by spraying air. Here, the cleaning unit includes a main body part, a fume suction unit that is coupled to a central portion of the main body part and suctions fumes generated during a laser notching process, and a scrap suction unit that is located below the fume suction unit and may suction scraps generated during a notching process. However, with this technology, only fumes and scraps can be removed, and it is difficult to remove a molten material of a surface of the electrode film that causes an internal short.

### SUMMARY OF THE INVENTION

The present invention is directed to providing an electrode plate manufacturing apparatus that is located in an area of a coated part after an electrode plate of a secondary battery is notched and capable of quickly and efficiently removing a molten material causing an internal short, and a method thereof.

The present invention is also directed to providing an electrode plate manufacturing apparatus and method that are capable of forming electrode tabs having various shapes without spatial limitation.

The present invention is also directed to providing an electrode plate manufactured by the electrode plate manufacturing apparatus and method.

An electrode plate manufacturing apparatus includes a first laser radiation unit (20) that radiates a first laser beam (L1) in a first direction (-Z-axis direction) perpendicular to an electrode film (10) located between rollers of a transfer device to notch at least a portion of the electrode film (10) and a second laser radiation unit (30) that radiates a second laser beam (L2) to a notched area of the electrode film (10), which is notched by the first laser radiation unit (20), to remove a material of a surface of the electrode film (10) melted by the first laser beam (L1).

The second laser radiation unit (30) may be spaced apart from the first laser radiation unit (20) in a second direction (-X-axis direction) and radiate the second laser beam (L2) at an angle inclined with respect to the first direction.

The second laser radiation unit (30) may radiate the second laser beam (L2) at an angle of 1° to 179° with respect to the first direction.

The second laser radiation unit (30) may set a radiation path of the second laser beam (L2) for removing the material melted by the first laser beam (L1).

The electrode film (10) may include an uncoated part (14) and coated parts (12) arranged to face each other on both surfaces of the uncoated part (14), and the first laser beam (L1) may be radiated in the first direction to remove the coated parts (12) and the uncoated part (14). The second laser radiation unit (30) may radiate the second laser beam (L2) to be inclined in a second direction (-X-axis direction) toward a side of the electrode film (10), to remove the molten material remaining on the uncoated part (14) and the coated parts (12).

An electrode plate manufacturing method includes a first operation of radiating a first laser beam (L1) in a first direction (-Z-axis direction) perpendicular to an electrode film (10) to notch at least a portion of the electrode film (10) and a second operation of obliquely radiating a second laser beam (L2) with respect to the first direction to remove a molten material melted by the first laser beam (L1) and located on a surface of the electrode film (10).

In the second operation, the second laser beam (L2) may be radiated at an angle of 1° to 179° with respect to the first direction.

An electrode plate manufactured through a process including a first operation of radiating a first laser beam (L1) in a first direction (-Z-axis direction) perpendicular to an electrode film (10) to notch at least a portion of the electrode film (10) and a second operation of obliquely radiating a second laser beam (L2) with respect to the first direction to remove a molten material melted by the first laser beam (L1) and located on a surface of the electrode film (10) is provided.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a schematic view of an electrode plate manufacturing apparatus according to an exemplary embodiment of the present invention;
FIG. 2 is an enlarged view of part A of FIG. 1;
FIG. 3 is a schematic view of an electrode plate manufacturing apparatus according to another exemplary embodiment of the present invention;
FIG. 4 is a view in which a molten material is removed by radiating a second laser beam according to the exemplary embodiment of the present invention;
FIG. 5 is an electron microscope picture for comparison between a cross section (see FIG. 5A) of an electrode plate manufactured by mold notching according to the related art and a cross section (see FIG. 5B) of an electrode plate manufactured by a method according to the embodiment of the present invention;
FIG. 6 is an electron microscope picture of a cross section of the electrode plate to compare a state (see FIG. 6A) before a radiation process of a second laser radiation unit according to the exemplary embodiment of the present invention and a state (see FIG. 6B) after the radiation process;
FIG. 7 is an experimental result table illustrating a material content of a surface of a coated part according to a radiation angle of the second laser radiation unit in laser cutting of a secondary battery electrode plate; and
FIG. 8 is a flowchart illustrating an electrode plate manufacturing method according to an exemplary embodiment of the present invention.

### DETAILED DESCRIPTION OF EXEMPLARY EMBODIMENTS

Hereinafter, an electrode plate manufacturing apparatus according to exemplary embodiments of the present invention will be described in detail with reference to the accompanying drawings.

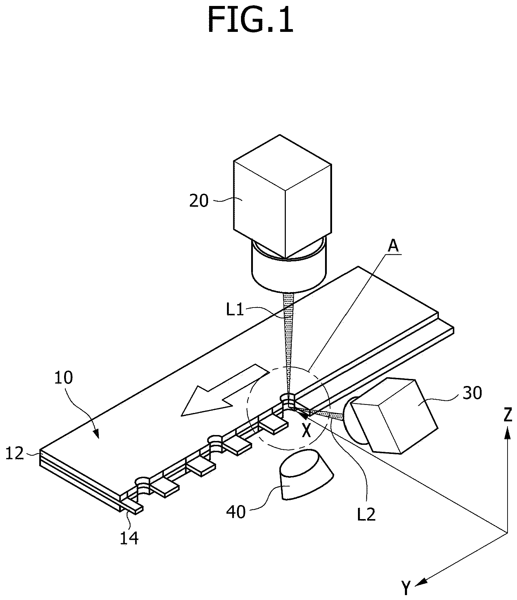

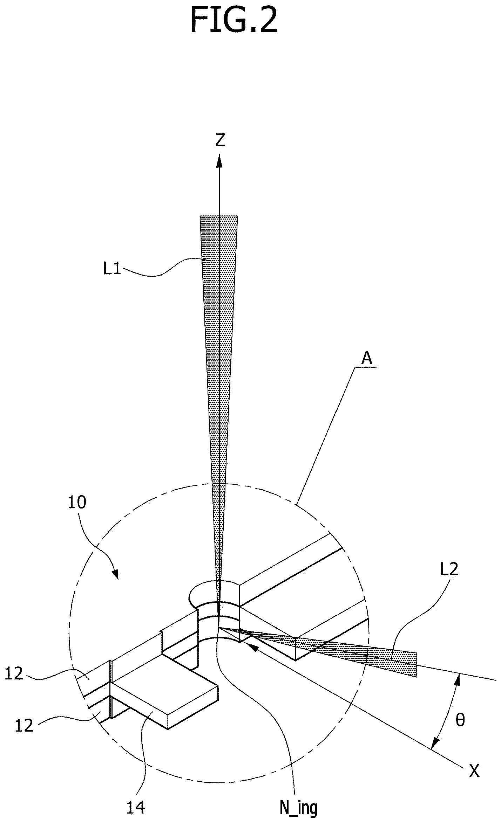

FIG. 1 is a schematic view of an electrode plate manufacturing apparatus according to an exemplary embodiment of the present invention, and FIG. 2 is an enlarged view of part A of FIG. 1.

Referring to FIGS. 1 and 2, the electrode plate producing apparatus according to the exemplary embodiment of the present invention includes a first laser radiation unit 20 and a second laser radiation unit 30.

The first laser radiation unit 20 may radiate a first laser beam L1 in a first direction (-Z-axis direction) perpendicular to an electrode film 10 located between rollers of a transfer device and notch at least portions of a coated part 12 and an uncoated part 14.

The second laser radiation unit 30 may radiate a second laser beam L2 in a direction inclined with respect to the first direction onto a notched area N_ing notched by the first laser radiation unit 20 to heat-evaporate or etch a material melted by the first laser beam L1.

The first laser radiation unit 20 according to the embodiment of the present invention performs notching using the first laser beam L1, unlike a method of performing punching using a mold apparatus according to the related art. The first laser radiation unit 20 may control a path of the emitted first laser beam L1 using an internal mirror or the like, thereby achieving precise notching. As the embodiment, the first laser radiation unit 20 may control the path of the first laser beam L1 to notch the coated part 12 and the uncoated part 14 of the electrode film 10 in various shapes. That is, the mold apparatus according to the related art may notch only one shape using one apparatus, but the electrode plate manufacturing apparatus according to the embodiment of the present invention may notch the coated part 12 and the uncoated part 14 in various shapes.

Further, the first laser radiation unit 20 may precisely notch the electrode film 10 through offset processing that precisely controls the path of the first laser beam L1 in contact with the electrode film 10. The path of the first laser beam L1 may be adjusted while moving the first laser radiation unit 20 or the path of the reflected first laser beam L1 may be adjusted while moving a mirror in the first laser radiation unit 20 on which the first laser beam L1 is incident.

The electrode film 10 includes the coated part 12 in which an active material is applied to a current collector and the uncoated part 14 in which the active material is not applied to the current collector. That is, the electrode film 10 means an electrode.

A molten material means a material obtained by being partially melted by the first laser beam L1 and mixing the coated part 12 and the uncoated part 14 exposed at the electrode film 10. The molten material may be solidified while being located on a side surface of the electrode film 10.

The second laser radiation unit 30 radiates the second laser beam L2 to the side surface of the electrode film 10 on which the molten material is located, and thus removes the molten material including a material of the uncoated part 14. In addition, dross formed on one or more of an upper side and a lower side of the coated part 12 is removed together, and thus an internal short due to the dross and the material of the molten uncoated part 14 can be prevented.

Meanwhile, the electrode plate manufacturing apparatus according to the exemplary embodiment of the present invention further includes a vision unit (not illustrated) for detecting a location of the material melted by the first laser beam L1 and a control unit for controlling radiation paths and sizes of beams of the first laser beam L1 and the second laser beam L2.

The transfer device, which is a transfer unit for transferring the electrode film 10, may include a transfer device including rollers (not illustrated) for unwinding the electrode film 10 wound before processing on one side thereof and rewinding the electrode film 10 on the other side thereof after laser cutting.

The first laser radiation unit 20 includes an optical module for radiating the first laser beam L1 in the first direction (-Z-axis direction) perpendicular to the electrode film 10. In this case, the optical module of the first laser radiation unit 20 includes a scanner device that transmits a laser beam from a laser generator to cut the electrode film 10, a mirror that transmits the laser beam, and a beam expander that adjusts the size of the laser beam.

The second laser radiation unit 30 includes an optical module for radiating the second laser beam L2 to be inclined at an angle of 1° to 179° in the first direction of the notched area N_ing that is notched by the first laser radiation unit 20, that is, at an angle of -89° to 89° in a second direction (-X-axis direction) that is a lateral direction of the electrode film 10. As an embodiment, the second laser radiation unit 30 includes an optical module for radiating the second laser beam L2 to be inclined at an angle of 45° to 135° with respect to the first direction of the notched area N_ing that is notched by the first laser radiation unit 20, that is, at an angle of - 45° to 45° with respect to the second direction (-X-axis direction) toward a side of the electrode film 10.

Meanwhile, according to an exemplary modification of the present invention, the second laser radiation unit 30 further includes a rotation moving unit (not illustrating) that may rotate and move within the range of the angle with respect to the electrode film 10. In this way, as the laser beam is continuously radiated by the second laser radiation unit 30 rotated by the rotation moving unit, the material melted by the first laser radiation unit 20 may be efficiently removed from a side surface and upper and lower surfaces of a cut surface. In this case, the optical module of the second laser radiation unit 30 includes a scanner device that transmits the laser beam from the laser generator to remove the molten material of a surface of the electrode film 10, a mirror that transmits the laser beam, and a beam expander that adjusts the size of the laser beam.

The first laser radiation unit 20 and the second laser radiation unit 30 may be configured as a continuous waveform laser or a pulsed laser. In addition, a center wavelength of the output laser beam is not limited.

Laser specifications of the first laser radiation unit 20 and the second laser radiation unit 30 may be configured as in Table 1 below.

**[Table 1]**

| Laser width | Tens of picoseconds (ps) to hundreds of nanoseconds (ns) |
|---|---|
| Repeated cycle of spot | 20 kHz to 4000kHz |
| Laser processing speed | 100 mm/s to 16000 mm/s |
| Size of spot | 5 µm to hundreds of µm |
| Energy of spot | 0.025 mJ to 0.9mJ |
| Number of repetitions | 1 time to 50 times |
| Spot overlapping rate | 10% to 90% |

In a state in which the electrode film 10 is transferred by the transfer device at a set speed or stopped, the material notched by the first laser radiation unit 20 and melted by the second laser radiation unit 30 may be removed. In this case, the first and second laser radiation units 20 and 30 irradiate the electrode film 10 with a laser beam along a set radiation path through the scanner device.

According to the exemplary embodiment of the present invention, the second laser radiation unit 30 is spaced a set distance from the first laser radiation unit 20 in the second direction and has the same Y coordinate value as the first laser radiation unit 20. In this case, the radiation path of the second laser beam L2 may be the same as the radiation path of the first laser beam L1. Further, the second laser radiation unit 30 may be operated after a set time after the first laser radiation unit 20 is operated.

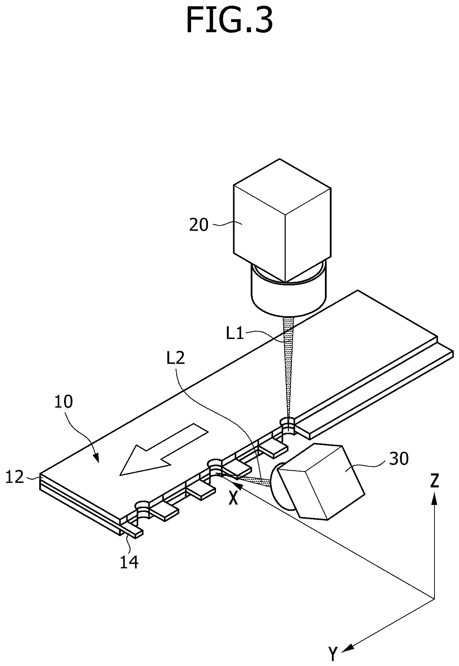

FIG. 3 is a schematic view of an electrode plate manufacturing apparatus according to another exemplary embodiment of the present invention.

According to another embodiment of the present invention, as illustrated in FIG. 3, the second laser radiation unit 30 is spaced a set distance from the first laser radiation unit 20 in the second direction and the third direction. That is, a radiation location of the second laser radiation unit 30 is located at the rear of a radiation location of the first laser radiation unit 20 based on a transfer direction of the electrode film 10. In this case, a location of the molten material is detected by the vision unit, and the radiation path and the size of the beam of the second laser radiation unit 30 are set by the control unit that receives information on the location of the molten material from the vision unit.

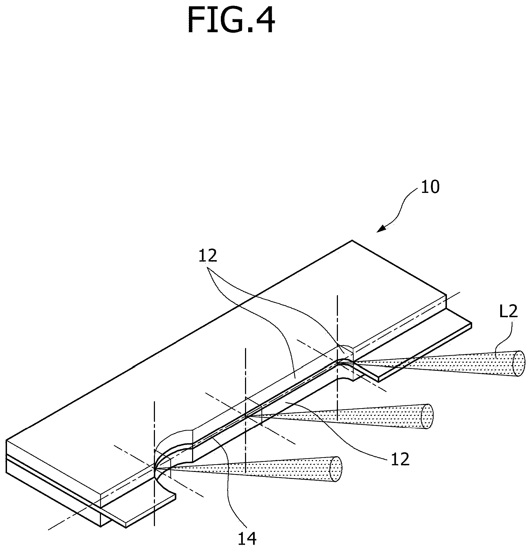

FIG. 4 is a view in which a molten material is removed by radiating a second laser beam according to the exemplary embodiment of the present invention.

Referring to FIG. 4, the electrode film 10 includes the uncoated part 14 and the coated parts 12 arranged to face each other on both surfaces of the uncoated part 14. As described above, the first laser beam L1 is radiated in the first direction to remove an area of the coated part 12 and an area of the uncoated part 14. The second laser beam L2 is radiated to a surface of the coated part 12 disposed in the second direction to remove the molten material of the remaining uncoated part 14.

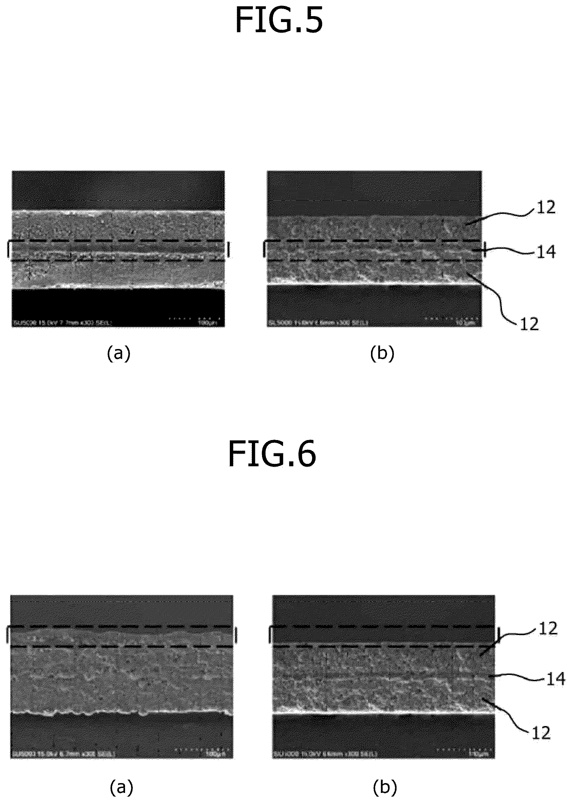

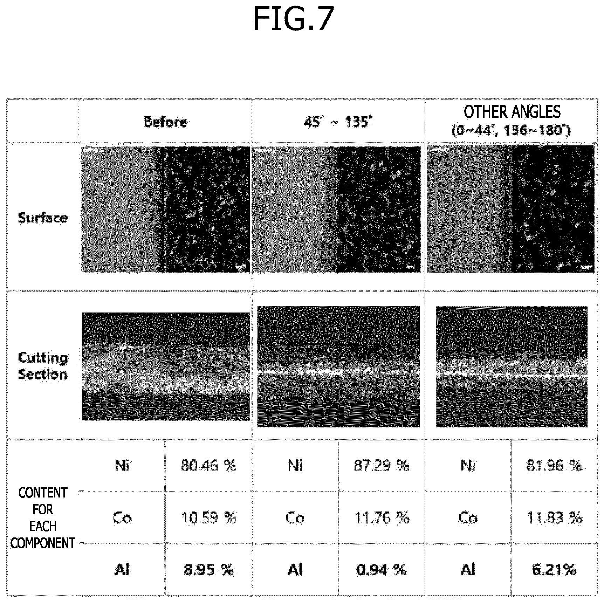

FIG. 5A is a picture illustrating a cross section of an electrode plate manufactured by mold notching according to the related art, and FIG. 5B is a picture illustrating a cross section of an electrode plate manufactured by an electrode plate manufacturing method according to the exemplary embodiment of the present invention. FIG. 6A is a picture before the molten material of the cross section of the electrode plate is removed through the second laser radiation unit, FIG. 6B is a picture after the molten material of the cross section of the electrode plate is removed through the second laser radiation unit, and FIG. 7 is an experimental result table illustrating a material content of a surface of a coated part according to a radiation angle of the second laser radiation unit in laser cutting of a secondary battery electrode plate.

Referring to FIG. 5A, the uncoated part notched using the mold apparatus is cut to have a clean and smooth cross section. According to a state of the mold apparatus, wear lines or wear patterns having various shapes and patterns such as wave pattern-shaped cut line scales or patterns may be provided on a cut surface of the uncoated part. On the other hand, referring to FIG. 5B, the uncoated part 14 has a cross section in a form melted by laser notching.

Referring to FIG. 7, it may be identified that an aluminum component, which is the material of the uncoated part 14, is greatly reduced in the area of the coated part 12, and in this case, the aluminum component has an aluminum content similar to an aluminum content in the cross section of the coated part 12 manufactured by the mold notching according to the related art.

Referring to FIG. 6A, it may be identified that aluminum, which is the material of the uncoated part 14, is melted and located in the area of the coated part 12, and the dross is formed on upper and lower sides of the coated part 12. That is, the second laser radiation unit 30 according to the embodiment of the present invention may significantly reduce a defect of a secondary battery by removing the dross formed on one side of the coated part 12 to prevent damage to a separator, and at the same time, to prevent occurrence of a short due to the molten material including the material of the uncoated part 14.

Meanwhile, due to the arrangement structure of the first and second laser radiation units 20 and 30, a space for the notching and the removing of the molten material can be minimized, and at the same time, work efficiency can be improved.

Further, it is preferable that the electrode plate manufacturing apparatus according to still another exemplary embodiment of the present invention further includes a suction unit 40 for guiding a heat-evaporated material to the outside when the material melted by the second laser beam L2 of the second laser radiation unit 30 is heat-evaporated.

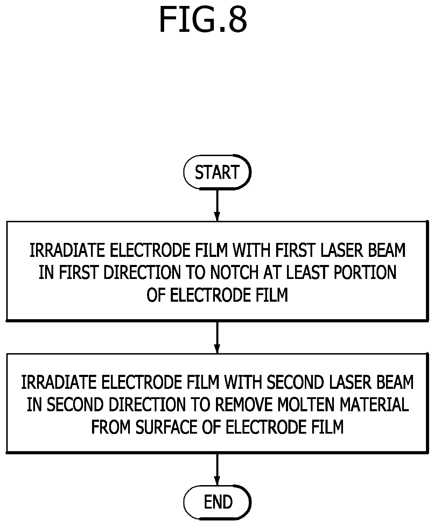

FIG. 8 is a flowchart illustrating an electrode plate manufacturing method according to an exemplary embodiment of the present invention. In detail, the electrode plate manufacturing method includes a first operation of radiating the first laser beam L1 in the first direction perpendicular to the electrode film 10 such that at least a portion of the electrode film 10 is notched to form an electrode tab and a second operation of radiating the second laser beam L2 in the second direction toward the side of the electrode film 10 to remove the molten material formed by the first laser beam L1 after the first operation.

In the first operation and the second operation, the electrode film 10 may be transferred at a set speed or stopped by the transfer device.

In the second operation, the location of the molten material may be detected by the vision unit, and the radiation path and the size of the beam of the second laser beam L2 may be set according to information on the location of the molten material.

Meanwhile, according to the exemplary embodiment of the present invention, an electrode plate of a secondary battery manufactured through the above-described process is included.

According to the present invention, a material which is melted by laser notching and located in an area of a coated part can be quickly and efficiently removed, and thus an internal short can be prevented during a battery assembly process or battery operation.

Further, in the present invention, as a laser beam is radiated at a location spaced apart from an electrode film when a molten material is removed, a radiation path of the laser beam does not interfere when notching is performed to change a shape of an electrode tab, and thus various types of electrode tabs can be efficiently formed without spatial limitation.

Further, in the present invention, a second laser radiation unit for removing a molten material includes a scanner device and a beam expander, and thus the molten material can be more efficiently removed by changing a radiation path and a size of a beam.

Further, in the present invention, since an electrode plate film is cut and a molten material is removed using a laser beam, the electrode plate film can be manufactured in various shapes, and the molten material located in an area of a coated part and causing an internal short can be removed, and thus occurrence of defects in an electrode plate can be reduced.

Further, in the present invention, when notching is performed to change a shape of an electrode tab, the electrode tab does not interfere with a laser radiation path, and thus work can be performed without spatial limitation.

Further, in the present invention, a molten material can be efficiently removed by changing a radiation path and a size of a beam.

## Claims

1. An electrode plate manufacturing apparatus comprising:
a first laser radiation unit (20) configured to radiate a first laser beam (L1) in a first direction (-Z-axis direction) perpendicular to an electrode film (10) located between rollers of a transfer device to notch at least a portion of the electrode film (10); and
a second laser radiation unit (30) configured to radiate a second laser beam (L2) to a notched area of the electrode film (10), which is notched by the first laser radiation unit (20), to remove a material of a surface of the electrode film (10) melted by the first laser beam (L1).

2. The electrode plate manufacturing apparatus of claim 1, wherein the second laser radiation unit (30) is spaced apart from the first laser radiation unit (20) in a second direction (-X-axis direction) and radiates the second laser beam (L2) at an angle inclined with respect to the first direction.

3. The electrode plate manufacturing apparatus of claim 1, wherein the second laser radiation unit (30) radiates the second laser beam (L2) at an angle of 1° to 179° with respect to the first direction.

4. The electrode plate manufacturing apparatus of claim 3, wherein the second laser radiation unit (30) sets a radiation path of the second laser beam (L2) for removing the material melted by the first laser beam (L1).

5. The electrode plate manufacturing apparatus of claim 1, wherein the electrode film (10) includes an uncoated part (14) and coated parts (12) arranged to face each other on both surfaces of the uncoated part (14), and the first laser beam (L1) is radiated in the first direction to remove the coated parts (12) and the uncoated part (14).

6. The electrode plate manufacturing apparatus of claim 5, wherein the second laser radiation unit (30) radiates the second laser beam (L2) to be inclined with respect to a second direction (-X-axis direction) toward a side of the electrode film (10) to remove the melted material remaining on the uncoated part (14) and the coated parts (12).

7. An electrode plate manufacturing method comprising:
a first operation of radiating a first laser beam (L1) in a first direction (-Z-axis direction) perpendicular to an electrode film (10) to notch at least a portion of the electrode film (10); and
a second operation of obliquely radiating a second laser beam (L2) with respect to the first direction to remove a molten material melted by the first laser beam (L1) and located on a surface of the electrode film (10).

8. The electrode plate manufacturing method of claim 7, wherein, in the second operation, the second laser beam (L2) is radiated at an angle of 1° to 179° with respect to the first direction.

9. An electrode plate manufactured through a process including a first operation of radiating a first laser beam (L1) in a first direction (-Z-axis direction) perpendicular to an electrode film (10) to notch at least a portion of the electrode film (10) and a second operation of obliquely radiating a second laser beam (L2) with respect to the first direction to remove a molten material melted by the first laser beam (L1) and located on a surface of the electrode film (10).
